# EUROPEAN PATENT APPLICATION

(11) **EP 3 208 762 A1**
(43) Date of publication of application: **23.08.2017**
(21) Application number: 17156573.2
(22) Date of filing: 16.02.2017
(51) Int. Cl.: G06Q 30/02

(54) **PERSONALIZED LOCATION-BASED OFFERS**

(30) Priority: 16.02.2016 US 201615045049
(71) Applicant: Conversant, LLC, Chicago, IL 60606 (US)
(72) Inventor: EDELSHTEYN, Rachel, Chicago, IL Illinois 60606 (US)
(74) Representative: Käck, Stefan

(57) **Abstract**

A system (100) that combines location information and offline and online activity history provides for personalized offers that may be sent to a mobile device (110). The personalized offers may make use of where the person (105) associated with the mobile device (110) has been, in addition to where they are now, as well as what the person (105) has purchased or done in the past, either offline or online. By providing better personalization, the offers may be made more effective and less intrusive or annoying to the consumer (105) associated with the mobile device (110).

## Description

### TECHNICAL FIELD

The present invention relates to the field of personalization, and in particular to techniques for providing personalized offers based on location and prior activity.

### BACKGROUND ART

For many years, advertisers have delivered advertisements to prospective customers. Traditionally, advertisements have been targeted to audience groups, but have been delivered to the general populace, resulting in much advertising spend being wasted. One merchant in the early 20^{th} century famously said, "Half the money I spend on advertising is wasted; the trouble is I don't know which half."

In recent years, attempts have been made to improve advertising effectiveness by personalizing the advertisements using various techniques. But such techniques have been limited because of the information available for use in the personalization process. Better personalization techniques would be desirable.

### BRIEF DESCRIPTION OF DRAWINGS

The accompanying drawings, which are incorporated in and constitute a part of this specification, illustrate an implementation of apparatus and methods consistent with the present invention and, together with the detailed description, serve to explain advantages and principles consistent with the invention. In the drawings,
Figures 1-3 are block diagrams illustrating a system for delivering personalized offers to a mobile device according to various embodiments.
Figure 4 is a flowchart illustrating a technique for delivering personalized offers to a mobile device according to one embodiment.
Figure 5 is a block diagram illustrating a programmable device for use in implementing the system and technique of FIGs. 1-4 according to one embodiment.
Figure 6 is a block diagram illustrating a network infrastructure for use in implementing the system and technique of FIGs. 1-4 according to one embodiment.
Figure 7 is a block diagram illustrating a high-level architecture for implementing the techniques described herein according to one embodiment.

### DESCRIPTION OF EMBODIMENTS

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts are understood to reference all instance of subscripts corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

Although some of the following description is written in terms that relate to software or firmware, embodiments can implement the features and functionality described herein in software, firmware, or hardware as desired, including any combination of software, firmware, and hardware. References to daemons, drivers, engines, modules, or routines should not be considered as suggesting a limitation of the embodiment to any type of implementation.

As used herein, a "machine readable medium" means either a single physical medium or a collection of physical media that together store the contents described as being stored on the medium.

As used herein, a "computer system" means either a single computer system or a collection of computer systems that together function to perform the techniques described as being performed by the computer system. A computer system may be implemented as any type of programmable device, using any convenient technology that is known to the art, and may be implemented as physical, virtual, or a mixture of physical and virtual devices as desired.

As used herein, a "mobile device" means any type of programmable device designed for carrying or otherwise moving from place to place, such as a mobile phone, a table, a laptop computer, etc., including vehicles or other devices in which the programmable device may be embededed or otherwise incorporated. The mobile device may incorporate functionality for a single purpose or multiple purposes.

As used herein, a "database" means any type of data storage, using any convenient or desired format, including relational databases, hierarchical databases, and other forms of data storage, including simple text files. The database may be implemented using any desired storage devices, including multiple storage devices, and physical, virtual, or a mixture of physical and virtual devices as desired.

As used here, a "server" means a computer system generally used for receiving, storing, or transmitting information. A server may be used as a personal workstation by a user or may be provide services without direct user interaction.

As used herein, a "network" means any system for communicating data between two or more devices and may include local area networks, wide area networks, and any other type of network known to the art. The network may operate according to any desired networking protocols, including any version of the Internet Protocol (IP). A network may include a single network or any number of interconnected private or public networks, including cellular data networks.

As used herein, a "beacon" means a device that delivers information to devices that enter into range of the beacon, using any desired protocol for communication. The beacon may provide information that devices communicating with the beacon may use to obtain information from website or other network-connected systems. The type and amount of information provided by the beacon depends upon the type of beacon and the protocol used for communication, such as the EDDYSTONE™ and IBEACON™ protocols. (EDDYSTONE is a trademark of Google, Inc.; IBEACON is a trademark of Apple Inc.)

As used herein, an "offer" is any type of advertisement, discount, coupon, promotional code, etc. that may be offered to a consumer to as an incentive to perform a desired activity, such as a purchase. The offer may be delivered in any desired form, including email message, text message, banner advertisement, pop-up window, etc. The offer may be in the form of text or graphic information, including still images, animations, or other types of video, and including any combination of media. The offer may be configured for display by a particular app installed on the mobile device. The offer may be delivered for automatic display by the mobile device or may be configured as a notification that may be displayed only upon an action by the user to cause the display to occur, such as by the user visiting a specific website.

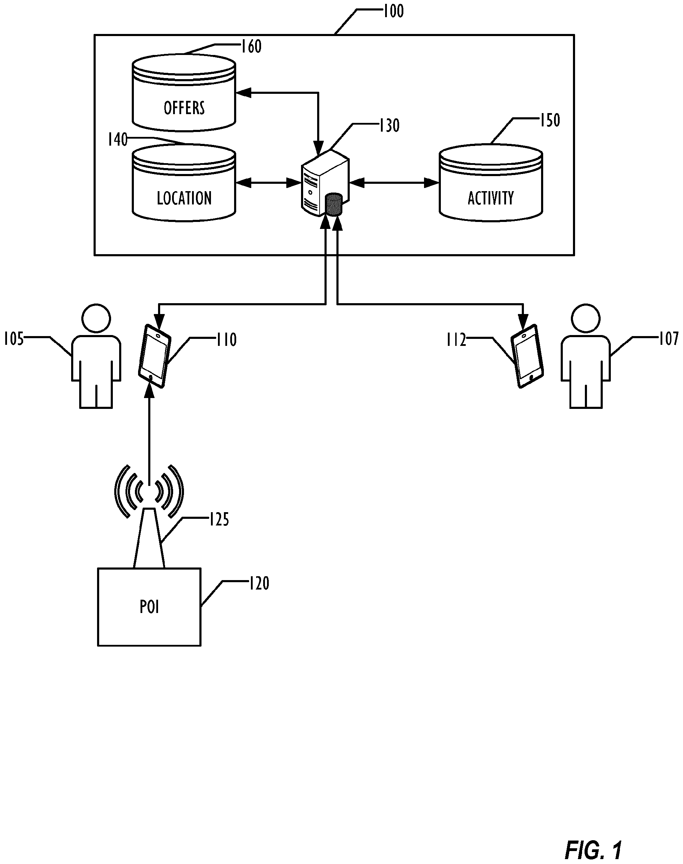

FIG. 1 is a block diagram illustrating a system for providing personalized offers to mobile devices according to one embodiment. System 100 interacts with mobile device 110 to provide the personalized offers. Although for clarity of the drawing the system 100 is illustrated as a single computer system 130 with three databases, location database 140, activity history database 150, and offers database 160, the system 100 may include any number of computer systems and databases, connected in any desired way, that together provide the desired functionality. For example, one computer system may interact with the location database 140 and a second computer system may interact with activity history database 150, and a third computer system may interact with the offers database 160. Any, all, or other computer systems not illustrated in FIG. 1 may communicate with the mobile device 110 or each other to provide the described functionality.

According to one scenario, a user 105 carrying the mobile device 110 walks or otherwise moves within range of beacon 125, which in this example is located at point of interest 120. The beacon 125 may be located within or exterior to the point of interest 120 as desired, and multiple beacons 125 may be provisioned at that location, providing the same or different information to mobile devices that come within range. The beacon 125 may use a protocol such as one of the BLUETOOTH® protocols, but may use any desired protocol. (BLUETOOTH is a registered certification mark of BLUETOOTH SIG, INC.) Most commonly, the beacon 125 may use BLUETOOTH low energy techniques. Non-BLUETOOTH technology that may be used includes Near Field Communication (NFC) technology as well as other wireless networking protocols. The beacon 125 may thus be used to determine that the mobile device 110 is proximal to a predetermined location, that of the point of interest 120 associated with the beacon 125.

When in range of the beacon 125, the mobile device 110 communicates with the beacon 125 to obtain information from the beacon. The type of information may vary depending on the type of beacon, and may involve communication with a beacon registry (not illustrated in FIG. 1) to translate between the data provided by the beacon 125 and the data that is intended for delivery responsive to interacting with the beacon 125. In some scenarios, the beacon 125 may provide a uniform resource locator (URL) which the mobile device may then use to access a website or other service provided to obtain the beacon information. In other scenarios, the beacon 125 may provide a beacon identifier that may be communicated with a beacon registry to obtain a URL associated with the beacon 125. Other techniques may be provided. Information about the beacon 125, including location information, may be provided directly by the beacon 125 or through a related service provider such as a beacon registry. Software on the mobile device 110 may include a application ("app") that interacts with the beacon 125 in some implementations. Other implementations may use functionality provided by an operating system controlling the mobile device 110. Implementations may use a mixture of apps and operating system functionality to provide the relevant functionality.

The mobile device 110 then communicates via a network to server 130. This may be by using the URL or other information associated with the beacon or may be independent of the information provided by the beacon. The location of the beacon 125 may be obtained from the beacon 125 or may be derived from the information provided by the beacon 125. Alternately, location services provided by hardware and software of the mobile device 110 may be used to provide location information defining a geolocation of the mobile device 110. The location information is communicated by the mobile device 110 to the server 130 or may be derived by the server 130 based on the information provided by the mobile device 110. The location information obtained by the server 130 may then be used to identify the relative location of the mobile device 110 to the point of interest 120.

The point of interest 120 may be any type of point of interest, including retailers and other commercial establishments. Non-commercial establishments, such as government offices, may also be points of interest that use beacons 125. In one simple example, a user 105 carrying the mobile device 110 may enter or approach a retail store location that uses a beacon 125. Upon detecting the beacon 125, in addition to taking any normal beacon-triggered action, the mobile device 110 may communicate with the server 130 who obtains location information and uses that location information to generate a personalized offer for the user 105.

The location information obtained by the server 130 may be stored in a location information database 140 for any desired purpose, including generating a location history for the mobile device 110.

In addition, the server 130 may communicate with the activity history database 150. In one implementation, the server 130 may attempt to identify a person, such as the user 105, associated with the mobile device 110, then use the person identification to obtain the relevant activity associated with that person in the activity history database 150. In other implementations, the activity history database 150 contains data that is associated with the mobile device 110, rather than a specific person. The activity history database 150 contains data about both online and offline activities associated with the person 105 or mobile device 110. Online activity as used herein means activities that are performed via computer systems, such as activities performed via websites. Offline activity as used herein means activities that are not performed via computer systems, such as activities performed at a retail establishment. By using both online and office activity histories, a more complete picture of the activity of the person 105 may be obtained. Although illustrated in FIG. 1 as an integrated database 150, the offline and online activities may be implemented as separate databases that are not stored as an integrated, but may be accessed by the server 130 to obtain an integrated activity history on-the-fly for purposes of generating or selecting personalized offers as described below.

One example of the type of activities that may be maintained by the activity history database may be purchase activities. By combining both online and offline purchasing history information, a more complete purchase history of the person 105 may be obtained, which can lead to better personalization of offers. For example, the person 105 may use the mobile device 110 or another computer system (not shown in FIG. 1) to purchase goods from an online retailer. If that online retailer also has brick and mortar retail stores that are visited by the person 105, considering only the online retail purchases gives an incomplete view of the person 105's purchasing. Similarly, accessing records of only in-store retail purchases would also give an incomplete picture. By using both online and offline purchasing history, a more complete view of person 105's purchasing becomes available for personalization processing.

Merely generating offers based on activity history information would be a form of personalization, but would be less useful than personalized offers that include location information. For example, a system that generated personalized offers based only on online and offline purchasing history without localizing the offer might generate an offer that is unusable by the person 105 at his or her present location. Advertising that is both timely and person-appropriate typically is more effective than advertising that is either timely or person-appropriate, but not both. For example, an offer that provides a discount on ski equipment that is provided in July when the person 105 visits a gym is less likely to be acted upon by the person 105 than the same discount on ski equipment when the person 105 visits a retailer offering ski equipment.

By combining location information and activity history, personalized offers may be provided that are both timely and person-appropriate. For example, if the person 105 has previously purchased organic produce from a grocery store, an offer that provides a coupon for organic carrots may be provided when the person 105 enters or approaches a grocery store, which need not be the grocery store where the previous organic purchase occurred. Depending on the granularity of the location information, different offers may be selected and provided based on the location within the point of interest.

In some implementations, preexisting offers are obtained from offer database 160. In other implementations, personalized offers may be generated by the server 130, either on the fly or by modifying un-personalized offers obtained from the offers database 160 with selected personalized information to produce a personalized offer. In some implementations, the personalizations may also be obtained from the offers database 160. Any desired technique may be used for generating or selecting a personalized offer based on location information and online and offline activity information may be used.

The offers need not directly relate to the activity history. For example, the person 105 may have a purchasing history that includes membership in a gym. Upon detecting that the person 105 is entering a clothing store, the person 105 may be provided an offer that relates to the purchase of workout apparel, even if the person 105 has never purchased workout apparel before. Similarly, a person who has recently purchased workout apparel (whether online or offline) may be offered a promotion on a gym membership when walking past a health club. The promotion may not be for the health club near the person, but may even be for a competitor health club.

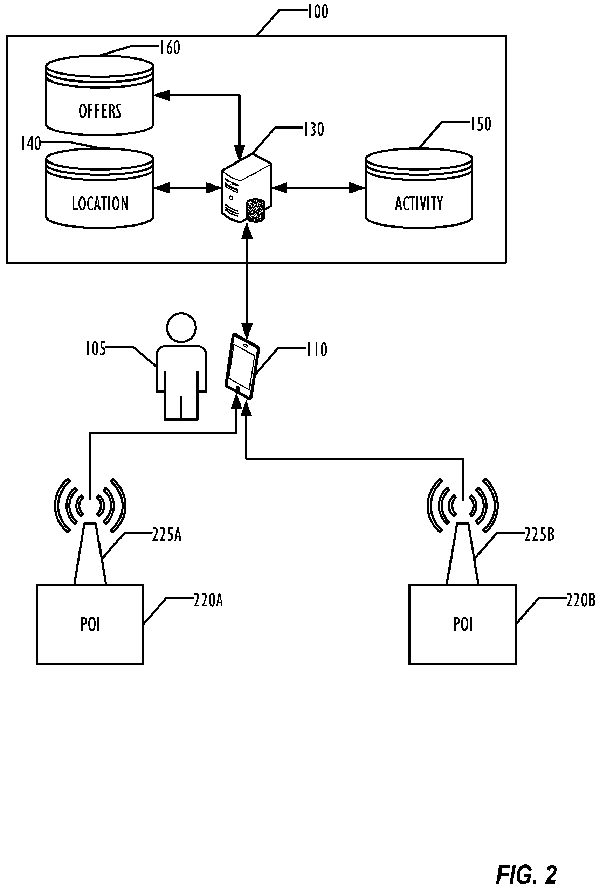

In an alternate scenario illustrated in FIG. 1, person 105 is known to be a member of a family or other associated group of people. This association of person 105 with the group of people may be accomplished in any desired way, including as an example the techniques described in U.S. Pat. App. No. 14/720,551, "System and Method for Maintaining Coherence of Association Across ANetwork Address Change or Reassignment," filed May 22, 2015, which is incorporated herein in its entirety for all purposes. As illustrated in FIG. 1, person 107 is a member of the same family or other associated group as person 105, for example, the spouse of person 105. In addition to sending personalized offers to person 105 as described above, the same techniques may be used to send the personalized offers to person 107. The personalized offers sent to mobile device 112 associated with person 107 may further be triggered by or personalized as a result of information about the location of mobile device 112, as well as offline and online activity of person 107, similar to the way in personalization is described above for person 105. The choice of sending the personalized offer is not exclusive to either mobile device 110 or mobile device 112. In some scenarios, personalized offers may be delivered to both mobile device 110 and mobile device 112, and which of mobile device 110 or mobile device 112 (or both) receives the offer may vary over time. Although only a single family or group member is illustrated in FIG. 1, similar techniques may be used to send personalized offers to any number of family or group members. Although not included in FIGs. 2-3 for clarity of the drawing, each of those scenarios may use similar techniques to provide personalized offers to family or associated group members.

FIG. 2 illustrates another scenario in which past location information may be used instead of or in addition to current location information. In this scenario, user 105 previously was within range of beacon 225A that is associated with point of interest 220A. Location information obtained by the server 130 is stored in the location database 140. Now, as user 105 approaches beacon 225B associated with point of interest 220B, personalized offers may be generated or selected that make use of both the previous location and the current location information. For example, point of interest 220A may be a gym where person 105 has purchased a membership. Person 105 may also have recently made an online purchase of workout clothes. Having left the gym, person 105 now enters or approaches point of interest 220B, which in this example may be a health food store. Because person 105 is someone having healthy interests (working out) based on their offline and online purchasing history and may be hungry (having just worked out) based on their location history, the server 130 may choose to provide an offer to buy a healthy snack at the health food store 220B. Alternately, the server 130 may offer a coupon for a fast food location somewhere else, just as grocery stores have long offered coupons at the checkout line for products that compete with products in the current purchase.

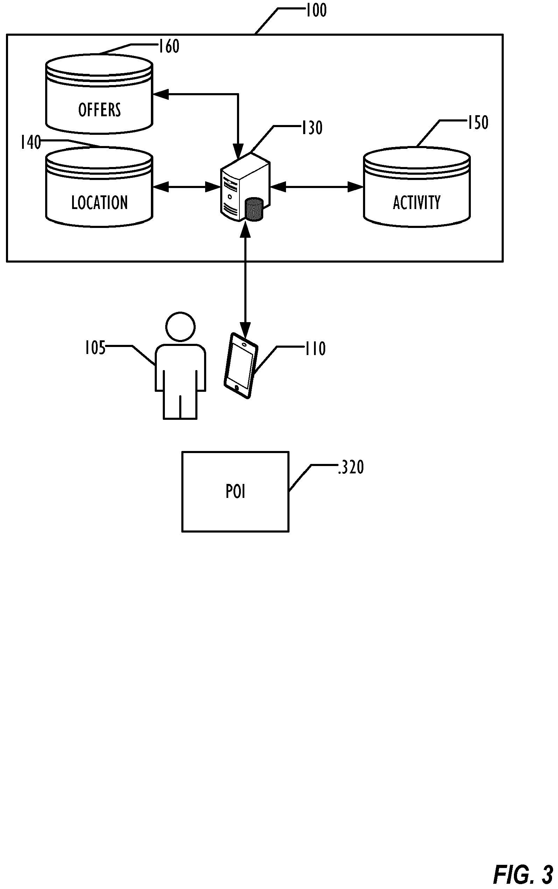

FIG. 3 illustrates a scenario in which the point of interest 320 does not employ beacons, but the server 130 has access to location services on the mobile device 110 that identify the geo-location of the mobile device 110 and user 105. Mobile devices commonly provide location services using satellite information such as provided by a Global Positioning System (GPS) receiver to generate geo-location information. Using location information obtained in that way from the mobile device 110, the server 130 may determine a proximity of the mobile device 110 to the point of interest 120, generating location information based on that proximity. The server 130 may combine the location information with activity history information for the user 105 and recognize that the user 105 is near point of interest 320 and generate an appropriate offer, providing the offer to the mobile device 110 without any interaction between the mobile device 110 and the point of interest 320.

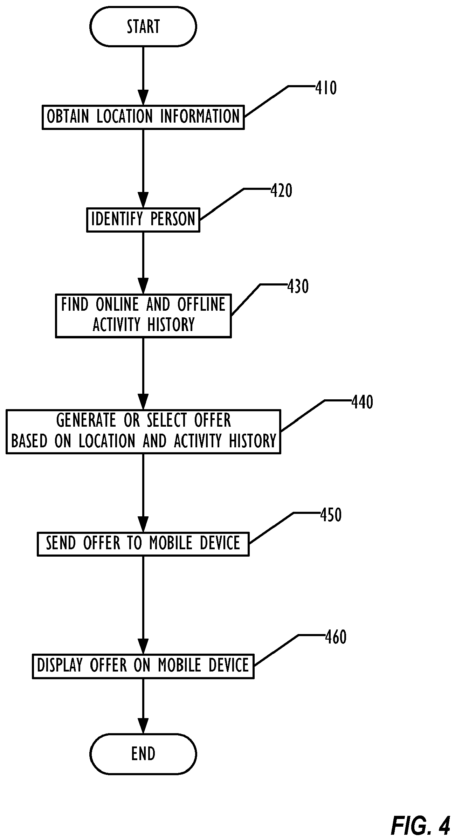

FIG. 4 is a flowchart illustrating a technique for generating personalized offers according to one embodiment. In block 410, the server 130 obtains location information associated with the mobile device 110 using any of the techniques described above. In block 420, a person 105 associated with the mobile device 110 may be identified. In some embodiments, the identification of a person may be omitted. In some embodiments, the mobile device may be associated with more than one person. In such a scenario, any desired technique may be used to select one of the associated people. Alternatively, the location history and activity history of all associated people may be used for determining and selecting a personalized offer. In block 430, the server 130 obtains the online and offline activity history associated with the person 105 or the mobile device 110. As indicated above, this activity is combined for purposes of the personalization procedure with the location information, which may include one or both of past location information and current location information. In block 440, the server 130 may generate or select an offer based on location and activity history.

In block 450, the offer may be transmitted to the mobile device 450. In some implementations, the offer may be sent without delay. In other implementations, the offer may be delayed until some other trigger event occurs, such as a time of day, or the person 105 returning home or leaving work as determined by other location information obtained by the server 130. For example, the server 130 may recognize that the person 105 visited point of interest 120 prior to going to work, then generate or select a personalized offer to be delivered when the person 105 leaves work to return home.

In block 460, the offer may be displayed on the mobile device 110, using any desired technique for display. In some embodiments, the offer may contain within the offer information defining how, when, or where it should be displayed on the mobile device 110.

As described above, much of the activity is performed by the server 130, based on information obtained from the various databases and the mobile device 110, with the offer pushed from the server 130 to the mobile device 110. In another implementation, an app or service running on the mobile device 110 may obtain location information and request a personalized offer from the server 130 based on the location information and activity history maintained by the server 130. Upon the server 130 selecting an offer, the mobile device 110 may pull or fetch the personalized offer from the server 130 and take the necessary actions to display the offer on the mobile device 110 to the person 105. Cookies may be stored on the mobile device 110 as part of the procedure.

Although only a single mobile device 110 is illustrated associated with person 105 in FIG. 1, person 105 may be associated with multiple mobile devices 110, and the mobile device 110 that receives the personalized offer may be a different mobile device 110 that was used in block 410 for obtaining location information.

As described above, the personalized offer is developed and transmitted to the mobile device 110. As described in the discussion of FIG. 1, personalized offers may also be sent to the mobile devices of family or group members, using similar techniques used to send the offers to mobile device 110.

In another scenario, the personalized offer may be sent to any device associated with person 105 (or family or group member 107), including devices not defined as mobile devices. For example, the location of mobile device 110 and online and offline activity of person 105 may be used to send personalized offers to a desktop computer also associated with person 105.

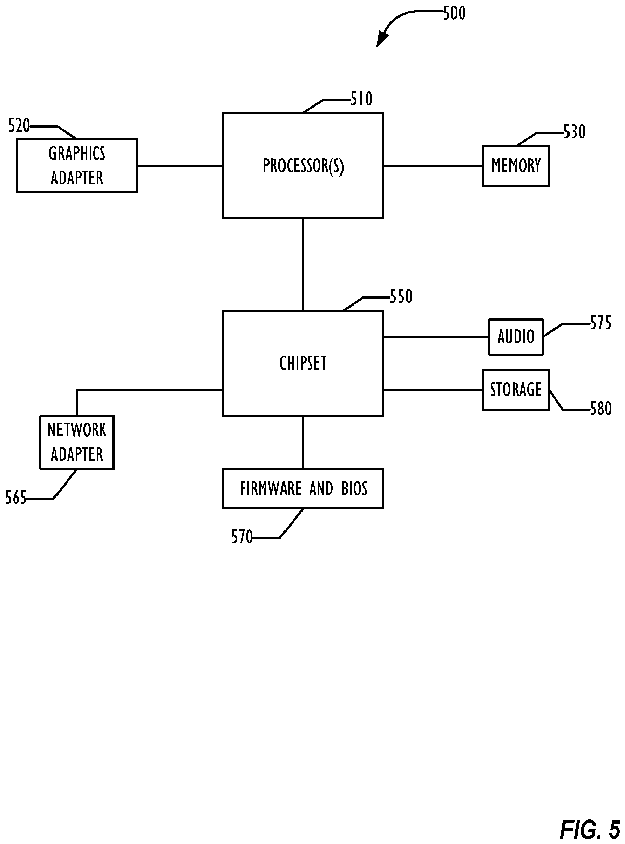

FIG. 5 is a block diagram of a computer system 500 for use as either the mobile device 110 or the server 130. One or more processors 510, which may be implemented a multiple cores in a single processor element are programmed to execute instructions that when executed cause the one or more of the processors 510 to perform the actions described above. Any type or processor 510 may be used, including microprocessors, fully programmable gate arrays, or application specific integrated circuits. A graphics adapter 520 may allow the processors 510 to display the offer on a display screen of the computer system 500. A memory 530 may be used to store instructions for execution, as well as data for use by the software executing on the computer system 500. The memory 530 may be any desired type of volatile or non-volatile memory. In some implementations, a separate chipset 550 provides additional capability, such as input/output controllers for the computer system 500. A network adapter 565 may provide wire or wireless network communications capability. A firmware or BIOS 570 may provide basic processing capability during boot or other pre-operating system states, as well as other processing instructions for use during operations. An audio controller 575 may provide the capability for generating audio signals. Storage device 580 may provide removable or non-removable storage capability for storing instructions for execution by the processors 510 as well as data for use by software running on the computer system 500. The storage device 580 may be any type of storage device, including magnetic disc drives, optical drives, solid-state storage devices, etc. The storage device may incorporate any time of machine readable media, including removable media on which software may be delivered for installation or execution by the computer system. Any desired type of interconnection techniques, including busses and point-to-point interconnects, may be used to connect the various components illustrated in FIG. 5.

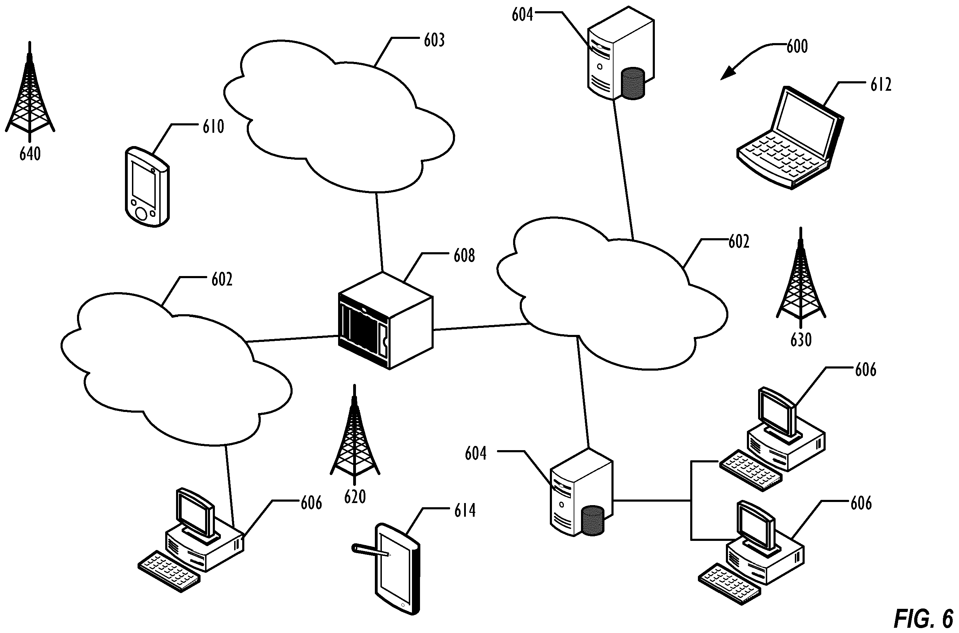

Referring now to FIG. **6****,** an example infrastructure **600** in which the techniques described above may be implemented is illustrated schematically. Infrastructure **600** contains computer networks **602.** Computer networks **602** may include many different types of computer networks available today, such as the Internet, a corporate network or a Local Area Network (LAN). Each of these networks can contain wired or wireless programmable devices and operate using any number of network protocols (*e.g*., TCP/IP). Networks **602** may be connected to gateways and routers (represented by **608**), end user computers **606,** and computer servers **604.** Infrastructure **600** also includes cellular network **603** for use with mobile communication devices. Mobile cellular networks support mobile phones and many other types of mobile devices. Mobile devices in the infrastructure **600** are illustrated as mobile phones **610,** laptops **612,** and tablets **614.** A mobile device such as mobile phone **610** may interact with one or more mobile provider networks as the mobile device moves, typically interacting with a plurality of mobile network towers **620, 630,** and **640** for connecting to the cellular network **603.** Although referred to as a cellular network in FIG. **6****,** a mobile device may interact with towers of more than one provider network, as well as with multiple non-cellular devices such as wireless access points and routers **608.** In addition, the mobile devices **610, 612** and **614** may interact with non-mobile devices such as computers **604** and **606** for desired services.

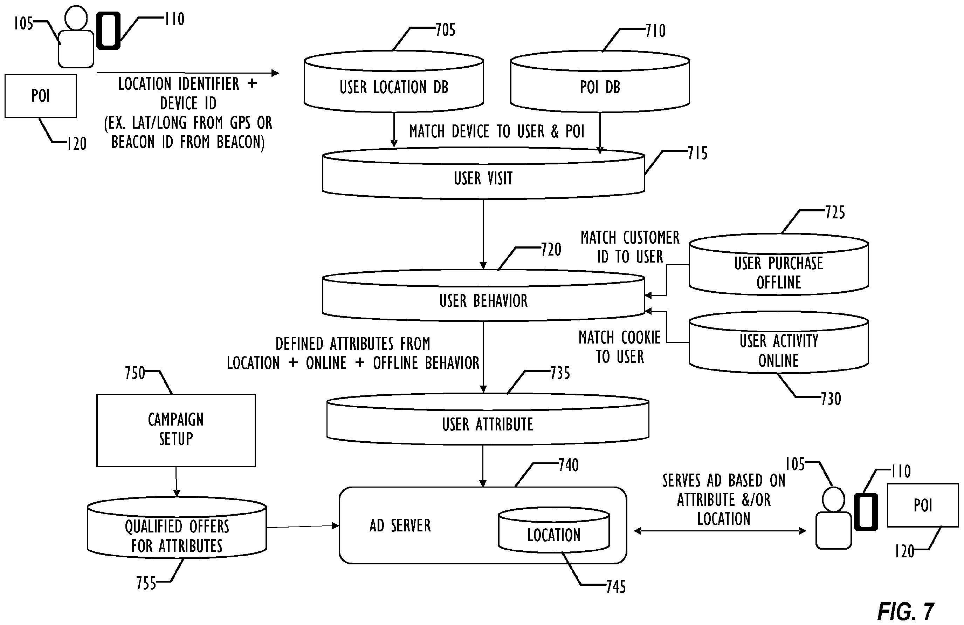

Figure 7 is a block diagram illustrating an architecture for implementing the techniques described above according to one embodiment. For clarity, the architecture is illustrated generally in terms of databases that are used in the implementation. One of ordinary skill in the art will understand that programmable devices such as servers or other computers provide computational resources for executing software stored on machine readable media for storing data into the databases, extracting data from the databases, and making use of the data extracted from the databases.

In the system illustrated in FIG. 7, the person 105 carrying mobile device 110 is detected nearby a point of interest 120, as described above. A location identifier associated with the point of interest 120 and a device identifier associated with the mobile device 110 are then sent to a backend system, such as the backend system 100 of FIG. 1, for processing. The location identifier may include geo-location data such as information from a GPS receiver in the mobile device 110 or a beacon identifier or other beacon location information associated with a beacon 125 located at the point of interest 120. A user location database 705 and a point of interest database 710 may be queried for information about the user 105, device 110, and point of interest 120, which can then be combined after matching the mobile device 110 to the user 105 and point of interest 120 in a user visit database 715. The user visit database thus may store data about visits of the user 105 and mobile device 110 near or at the location of the point of interest 120. User visit data may then be matched with offline purchase history information for the user 105 extracted from a user purchase offline database 725, typically by matching a customer id to the user. Similarly, user visit data may be matched with online activity information for the user 105 extracted from a user activity online database 730, typically by matching a cookie to the user 105. The user behavior database 720 may then be used to define attributes for the user 105 based on the location and online/offline behavior and stored in user attribute database 735. The attributes may include any attribute that may be relevant to an advertising campaign, such as "interested in sport," "foodie," "interested in technology," etc. These attributes are illustrative and by way of example only, and any desired attributes may be used.

An advertising campaign 750 may then define attributes that should be associated with the campaign for choosing what offers to send to prospective customers. The campaign setup 750 creates a database 755 of qualified offers that are associated with one or more attributes. The ad server 740 may then use the qualified offers database 755 and the user attribute 735 to select personalized qualified offers for the user 105, sending the offers to the mobile device 110. In some scenarios, the ad server may also use a location database 745 to select ads or offers to send to the user 105 and mobile device 110, based on the location of the mobile device 110 near or at a point of interest 120 that is relevant to the ad.

The architecture illustrated in FIG. 7 is illustrative and by way of example only, and other architectures may be used as desired or convenient. For example, any of the separate databases illustrated in FIG. 7 may be combined with other databases, whether or not illustrated in FIG. 7. In another example, any of the databases illustrated in FIG. 7 may be split into multiple databases as desired or convenient. Where a single element is illustrated in FIG. 7, multiple instances of that element may be used, separately or combined with other elements. As indicated above, any number of programmable devices may be associated with the databases illustrated in FIG. 7, and the databases may be local to or remote from the programmable devices. Any of the databases or programmable devices may be hosted by a cloud services provider as desired, and may be implemented on physical devices or may be virtualized.

By using both location information obtained relative to a mobile device and both online and offline activity history for the mobile device or person associated with the mobile device, personalized offers may be generated or selected that provide better personalization than has been possible with personalization that is only location-based, or which only includes online activity history. Such better personalization can provide a better user experience as well as provide more effective advertising or promotional capabilities, making promotional activities more efficient and less annoying to users.

Particular aspects of the subject-matter disclosed herein are set out in the following numbered clauses:
1. A method, comprising: obtaining location information associated with a mobile device; identifying an activity history associated with the mobile device, wherein the activity history comprises an online activity history and an offline activity history; selecting a personalized offer based on the location information and the activity history; and providing the personalized offer to the mobile device.
2. The method of clause 1, wherein obtaining location information associated with the mobile device comprises: receiving geo-location information from the mobile device.
3. The method of clause 1 or 2, wherein obtaining location information associated with the mobile device comprises: receiving information from the mobile device associated with a beacon; and determining that the mobile device is proximal to the beacon.
4. The method of clause 1, 2 or 3, wherein obtaining location information associated with the mobile device comprises: determining that the mobile device is proximal to a predetermined location; and associating the predetermined location with the mobile device.
5. The method of any of the preceding clauses, further comprising: storing the location information associated with the mobile device.
6. The method of any of the preceding clauses, further comprising: determining a proximity of the mobile device to a point of interest.
7. The method of any of the preceding clauses, wherein identifying an activity history comprises: identifying a person associated with the mobile device; and identifying an activity history associated with the person.
8. The method of any of the preceding clauses, wherein the location information comprises a current location information and a past location information.
9. The method of clause 8, wherein selecting a personalized offer based on the location information and the activity history comprises: selecting the personalized offer based on the past location information.
10. The method of any of the preceding clauses, wherein providing the personalized offer to the mobile device comprises: transmitting the personalized offer to the mobile device.
11. The method of any of the preceding clauses, wherein the location information indicates that the mobile device is or was proximal to a point of interest, and wherein providing the personalized offer to the mobile device comprises: providing the personalized offer to the mobile device when the mobile device is not proximal to the point of interest.
12. A non-transitory machine readable medium, on which are stored instructions, comprising instructions that when executed cause a machine to: obtain location information associated with a mobile device; identify an activity history associated with the mobile device, wherein the activity history comprises an online activity history and an offline activity history; select a personalized offer based on the location information and the activity history; and provide the personalized offer to the mobile device.
13. The machine readable medium of clause 12, wherein the instructions that when executed cause the machine to obtain location information associated with the mobile device comprise instructions that when executed cause the machine to: receive geo-location information from the mobile device.
14. The machine readable medium of clause 12 or 13, wherein the instructions that when executed cause the machine to obtain location information associated with the mobile device comprise instructions that when executed cause the machine to: receive information from the mobile device associated with a beacon; and determine that the mobile device is proximal to the beacon.
15. The machine readable medium of clause 12, 13 or 14, wherein the instructions that when executed cause the machine to obtain location information associated with the mobile device comprise instructions that when executed cause the machine to: determine that the mobile device is proximal to a predetermined location; and associate the predetermined location with the mobile device.
16. The machine readable medium of any of clauses 12-15, wherein the instructions further comprise instructions that when executed cause the machine to: store the location information associated with the mobile device.
17. The machine readable medium of any of clauses 12-16, wherein the instructions further comprises instructions that when executed cause the machine: determine a proximity of the mobile device to a point of interest.
18. The machine readable medium of any of clauses 12-17, wherein the instructions that when executed cause the machine to identify an activity history comprise instructions that when executed cause the machine to: identify a person associated with the mobile device; and identify an activity history associated with the person.
19. The machine readable medium of any of clauses 12-18, wherein the location information comprises a current location information and a past location information.
20. The machine readable medium of clause 19, wherein the instructions that when executed cause the machine to select a personalized offer based on the location information and the activity history comprise instructions that when executed cause the machine to: select a personalized offer is based on the past location information.
21. The machine readable medium of any of clauses 12-20, wherein the instructions that when executed cause the machine to provide the personalized offer to the mobile device comprise instructions that when executed cause the machine to: transmit the personalized offer to the mobile device.
22. The machine readable medium of any of clauses 12-21, wherein the location information indicates that the mobile device is or was proximal to a point of interest, and wherein the instructions that when executed cause the machine to provide the personalized offer to the mobile device comprise instructions that when executed cause the machine to: provide the personalized offer to the mobile device when the mobile device is not proximal to the point of interest.

While certain exemplary embodiments have been described in details and shown in the accompanying drawings, it is to be understood that such embodiments are merely illustrative of and not devised without departing from the basic scope thereof, which is determined by the claims that follow.

## Claims

1. A method, comprising:
obtaining location information associated with a mobile device;
identifying an activity history associated with the mobile device, wherein the activity history comprises an online activity history and an offline activity history;
selecting a personalized offer based on the location information and the activity history; and
providing the personalized offer to the mobile device.

2. The method of claim 1, wherein obtaining location information associated with the mobile device comprises:
receiving information from the mobile device associated with a beacon; and
determining that the mobile device is proximal to the beacon.

3. The method of claim 1 or 2, wherein obtaining geo-location information associated with the mobile device comprises:
determining that the mobile device is proximal to a predetermined location; and
associating the predetermined location with the mobile device.

4. The method of claim 1,2 or 3, further comprising:
determining a proximity of the mobile device to a point of interest.

5. The method of any of the preceding claims, wherein identifying an activity history comprises:
identifying a person associated with the mobile device; and
identifying an activity history associated with the person.

6. The method of any of the preceding claims, wherein the location information comprises a current location information and a past location information, and wherein selecting a personalized offer based on the location information and the activity history comprises:
selecting the personalized offer based on the past location information.

7. The method of any of the preceding claims, wherein providing the personalized offer to the mobile device comprises:
transmitting the personalized offer to the mobile device.

8. The method of any of the preceding claims,
wherein the location information indicates that the mobile device is or was proximal to a point of interest, and
wherein providing the personalized offer to the mobile device comprises:
providing the personalized offer to the mobile device when the mobile device is not proximal to the point of interest.

9. A non-transitory machine readable medium, on which are stored instructions, comprising instructions that when executed cause a machine to:
obtain location information associated with a mobile device;
identify an activity history associated with the mobile device, wherein the activity history comprises an online activity history and an offline activity history;
select a personalized offer based on the location information and the activity history; and
provide the personalized offer to the mobile device.

10. The machine readable medium of claim 9, wherein the instructions that when executed cause the machine to obtain location information associated with the mobile device comprise instructions that when executed cause the machine to:
receive information from the mobile device associated with a beacon; and
determine that the mobile device is proximal to the beacon.

11. The machine readable medium of claim 9 or 10, wherein the instructions that when executed cause the machine to obtain location information associated with the mobile device comprise instructions that when executed cause the machine to:
determine that the mobile device is proximal to a predetermined location; and
associate the predetermined location with the mobile device.

12. The machine readable medium of claim 9, 10 or 11, wherein the instructions further comprises instructions that when executed cause the machine:
determine a proximity of the mobile device to a point of interest.

13. The machine readable medium of any of claims 9-12, wherein the instructions that when executed cause the machine to identify an activity history comprise instructions that when executed cause the machine to:
identify a person associated with the mobile device; and
identify an activity history associated with the person.

14. The machine readable medium of any of claims 9-13, wherein the location information comprises a current location information and a past location information, and
wherein the instructions that when executed cause the machine to select a personalized offer based on the location information and the activity history comprise instructions that when executed cause the machine to:
select a personalized offer is based on the past location information.

15. The machine readable medium of any of claims 9-14,
wherein the location information indicates that the mobile device is or was proximal to a point of interest, and
wherein the instructions that when executed cause the machine to provide the personalized offer to the mobile device comprise instructions that when executed cause the machine to:
provide the personalized offer to the mobile device when the mobile device is not proximal to the point of interest.
